# EUROPÄISCHE PATENTSCHRIFT

(11) **EP 2 349 797 B1**
(45) Veröffentlichungstag und Bekanntmachung des Hinweises auf die Patenterteilung: **27.01.2016**
(21) Anmeldenummer: 09782206.8
(22) Anmeldetag: 26.08.2009
(51) Int. Cl.: B60T 8/1755, B60R 21/09, B60T 7/06, B60T 7/22

(54) **VERFAHREN ZUR EINSTELLUNG EINES BREMSSYSTEMS EINES FAHRZEUGS**
METHOD FOR ADJUSTING A BRAKE SYSTEM OF A VEHICLE
PROCÉDÉ D'AJUSTEMENT DU SYSTÈME DE FREINAGE D'UN VÉHICULE AUTOMOBILE

(30) Priorität: 20.10.2008 DE 102008042968
(43) Veröffentlichungstag der Anmeldung: 03.08.2011
(73) Patentinhaber: Robert Bosch GmbH, 70442 Stuttgart (DE)
(72) Erfinder: CETINKAYA, Ferah, 74360 Ilsfeld (DE)
(86) Internationale Anmeldenummer: PCT/EP2009/060988
(87) Internationale Veröffentlichungsnummer: WO 2010/046162

(56) Entgegenhaltungen:
- EP-A- 1 488 961
- DE-A1- 19 501 680
- DE-A1- 19 851 468
- DE-A1-102004 001 704
- US-A1- 2001 027 372

## Beschreibung

Die Erfindung bezieht sich auf ein Verfahren zur Einstellung eines Bremssystems nach dem Oberbegriff des Anspruches 1.

### Stand der Technik

In der 197 53 971 A1 wird ein Verfahren zur Steuerung einer Bremsanlage eines Fahrzeugs beschrieben, bei dem bei einer Kollision mit einem anderen Fahrzeug an den Radbremsen Bremskraft aufgebaut wird, die größer ist als die vom Fahrer durch die Betätigung des Bremspedals und/oder einer Feststellbremse vorgegebene Bremskraft. Durch den selbsttätigen Aufbau der Bremskraft soll bei Kollisionen die Schwere des Unfalls vermindert bzw. ein Folgeunfall verhindert werden. Die zusätzliche Bremskraft gewährleistet, dass das Fahrzeug im Stillstand verbleibt oder zumindest schneller in den Stillstand gebracht wird.

Der selbsttätige Aufbau der Bremskraft im Falle einer Kollision kann durch eine Reaktion des Fahrers überstimmt, d.h. aufgehoben werden, beispielsweise dadurch, dass der Fahrer das Beschleunigungspedal betätigt, nachdem ein selbsttätiger Bremskraftaufbau stattgefunden hat.

Mit der Durchbrechung des selbsttätigen Bremskraftaufbaus durch eine entsprechende Fahrerreaktion erhält der Fahrer die Hoheit über die alleinige Betätigung und Steuerung des Fahrzeuges zurück. Hierbei ist allerdings zu berücksichtigen, dass der Fahrer auch durch Panikreaktionen den selbsttätigen Bremskraftaufbau außer Kraft setzen kann, selbst wenn dies zu einer gefährlicheren Verkehrssituation führt als bei einer Fortsetzung der selbsttätigen Bremskrafterzeugung.

Aus der DE 10 2004 001 704 A1 ist es bekannt, bei einem Unfall das Bremspedal selbsttätig in die durchdrückte Position zu verstellen, was mithilfe eines am Bremspedal angreifenden Stellantriebes durchgeführt wird. Dadurch wird zum einen erreicht, dass das Bremspedal in Richtung des Bodens des Fußraumes verstellt wird, wodurch die Verletzungsgefahr für den Fahrer reduziert werden soll. Zum andern ist mit der Verstellbewegung des Bremspedals der Aufbau einer Bremskraft verbunden.

Die EP 1 488 961 A1 betrifft Maßnahmen, die im Fall einer bevorstehenden Kollision getroffen werden. Zu diesen Maßnahmen gehört ein selbsttätiger Bremsvorgang.

### Offenbarung der Erfindung

Der Erfindung liegt die Aufgabe zu Grunde, die Sicherheit in einem Fahrzeug durch selbsttätigen Aufbau von Bremskraft im Falle einer Kollision weiter zu erhöhen.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Einstellung eines Bremssystems eines Fahrzeuges wird im Falle einer Kollision selbsttätig Bremskraft aufgebaut. Das Bremssystem kann als hydraulische Bremse, als elektrohydraulische Bremse, als elektromotorische Bremse oder ggf. auch als elektropneumatische Bremse ausgeführt sein und wird durch Stellsignale eines zugeordneten Regel- bzw. Steuergerätes eingestellt, wobei in dem Regel- bzw. Steuergerät auch Informationen aus einer fahrzeugeigenen Sensorik verarbeitet werden können, beispielsweise Signale von radargestützten Sensoren, Lidarsensoren, Ultraschallsensoren oder optischen Sensoren. Darüber hinaus kommt auch eine Verarbeitung von Signalen aus Sensoren in Betracht, mit denen der längs- und/oder querdynamische Fahrzustand des Fahrzeuges erfasst wird, beispielsweise die Fahrzeuglängsgeschwindigkeit, die Fahrzeuglängsbeschleunigung, die Querbeschleunigung, die Gierrate oder der Radschlupf. Schließlich können in dem Regel- bzw. Steuergerät auch Informationen eines Airbag-Steuergerätes verarbeitet werden, aus denen hervorgeht, ob ein oder mehrere Airbags im Fahrzeug ausgelöst worden sind. Die Airbagauslösung kann für das Feststellen einer Kollision ausreichend sein, woraufhin über das Regel- bzw. Steuergerät der selbsttätige Bremskraftaufbau durchgeführt wird. Darüber hinaus ist es aber auch möglich, die Kollision über die Umfeldsensorik oder die Zustandsgrößensensorik festzustellen, wobei ggf. auch bereits kurz vor dem Eintreffen einer Kollision ein Bremskraftaufbau durchgeführt werden kann. Darüber hinaus ist es möglich, die Art und Weise des Bremskraftaufbaus von den eingegangenen Signalen abhängig zu machen, insbesondere im Hinblick auf den genauen Zeitpunkt des Bremskraftaufbaus, bei dem ggf. eine zeitliche Verzögerung als Totzeit eingeführt werden kann, hinsichtlich des Gradienten beim Aufbauen der Bremskraft sowie hinsichtlich des zu erreichenden, maximalen Bremskraftniveaus.

Um die Fahrersicherheit weiter zu erhöhen, wird bei der Kollision zusätzlich zu dem selbsttätigen Aufbau von Bremskraft auch mindestens ein Fußpedal aus der regulären, in den Fußraum einragenden Betriebsposition in eine aus dem Fußraum zumindest teilweise entfernte Außerbetriebsposition verstellt. Auch diese Verstellung des Fußpedals erfolgt in selbsttätiger Weise und ist an den Eintritt oder das unmittelbare Bevorstehen einer Kollision gekoppelt. Um die Verstellung bewerkstelligen zu können, ist das Fahrzeug zweckmäßigerweise mit Mitteln versehen, insbesondere mit einem Aktor, die bzw. der in der Lage ist, aktiv die Position des Fußpedals in der gewünschten Weise zu verstellen. Gegebenenfalls kommt auch ein passives System in Betracht, bei dem die Verstellbewegung des Fußpedals aus einer sonstigen fahrzeuginternen Verstellbewegung abgeleitet wird, beispielsweise aus der Verformung des Fahrzeugfrontbereichs.

Um sicherzustellen, dass Panikreaktionen des Fahrers nicht zu einem Abbruch der selbsttätigen Bremskrafterzeugung führen, ist gemäß einer zweckmäßigen Weiterbildung vorgesehen, dass im Falle einer Verstellung des mindestens einen Fußpedals in die Außerbetriebsposition die selbsttätige Bremskrafterzeugung nicht durch eine Fahrerreaktion außer Kraft gesetzt werden kann. In dieser Situation wird das sonst geltende Prinzip außer Kraft gesetzt, dass der Fahrer durch eine entsprechende Reaktion einen selbsttätigen Eingriff eines Regel- bzw. Steuersystems in das Fahrzeugverhalten überstimmen, also außer Funktion setzen kann. Bei einer Kollision und einem Einziehen des Fußpedals ist die Gefahr, dass der Fahrer durch eine Panikreaktion eine falsche Betätigung ausführt, die zu einer erhöhten Gefahrensituation führen würde, höher einzuschätzen als die Autonomie bzw. Führungshoheit des Fahrers über das Fahrzeug.

Es kann zweckmäßig sein, dass das Außerkraftsetzen der Fahrerüberstimmung an die Schwere der Kollision gekoppelt wird. In diesem Fall wird zweckmäßigerweise bei leichteren Kollisionen das Fußpedal nicht verstellt, es verbleibt vielmehr in seiner in den Fußraum einragenden Betriebsposition, wobei zugleich selbsttätig Bremskraft aufgebaut wird. Der Fahrer hat in dieser Situation die Möglichkeit, durch eine entsprechend Reaktion den selbsttätigen Aufbau von Bremskraft abzubrechen. Erst ab einer gewissen Schwere der Kollision wird auch das Fußpedal aus der in den Fußraum einragenden Betriebsposition in die Außerbetriebsposition verstellt, in der das Fußpedal nicht oder nur teilweise in den Fußraum einragt. Bei diesen schwereren Kollisionen wird ebenfalls selbsttätig Bremskraft aufgebaut, wobei dieser Bremskraftaufbau wie vorbeschrieben durch eine Fahrerreaktion nicht mehr durchbrochen werden kann.

Um die Schwere der Kollision zu beurteilen, können verschiedene sensorische Daten herangezogen werden. In Betracht kommt gemäß einer einfach zu realisierenden Ausführung die Abfrage, ob ein oder mehrere Airbags ausgelöst wurden; ist dies nicht der Fall, kann von einer leichteren Kollision ausgegangen werden, auch wenn sonstige Daten wie z.B. Signale der Umfeldsensorik oder der Zustandsgrößensensorik auf eine unmittelbar bevorstehende oder bereits tatsächlich eingetretene Kollision hinweisen. Wird dagegen auch mindestens ein Airbag ausgelöst, so ist von einer schweren Kollision auszugehen, bei der das mindestens eine Fußpedal in die Außerbetriebsposition verstellt wird und außerdem selbsttätig Bremskraft aufgebaut wird, die auch nicht durch eine Fahrerreaktion außer Kraft gesetzt werden kann.

Bei dem Fußpedal, welches bei Kollisionen aus der Betriebsposition in die aus dem Fußraum zumindest teilweise, ggf. vollständig entfernte Außerbetriebsposition verstellt wird, handelt es sich um das Beschleunigungspedal, um das Bremspedal und/oder um das Kupplungspedal, sofern ein Kupplungspedal vorhanden ist.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung ein Kraftfahrzeug, welches mit vorderen und hinteren Bremseinrichtungen versehen ist sowie ein Regel- bzw. Steuergerät zur Einstellungen der Bremseinrichtungen aufweist,
- Fig. 2: in Blockdarstellung das Zusammenwirken verschiedener Regel- bzw. Steuergeräte und des Bremssystems im Fahrzeug.

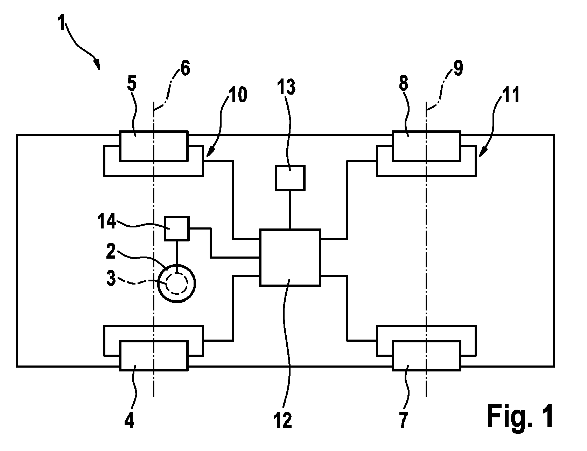

Das in Fig. 1 dargestellte Kraftfahrzeug 1 ist über eine als Lenkrad 2 ausgeführte Lenkhandhabe zu steuern, wobei in das Lenkrad 2 ein Airbag 3 integriert ist, dem ein Airbag-Steuergerät 14 zugeordnet ist. Das Kraftfahrzeug 1 ist mit einem Bremssystem ausgestattet, das eine vordere Bremseinrichtung 10 und eine hintere Bremseinrichtung 11 umfasst, wobei die Bremseinheiten der vorderen Bremseinrichtung 10 auf die an der Vorderachse 6 drehbar gelagerten Vorderräder 4 und 5 und die Bremseinheiten der hinteren Bremseinrichtung 11 auf die an der Hinterachse 9 drehbar gelagerten Hinterräder 7 und 8 wirkt. Die Bremseinheiten der vorderen Bremseinrichtung 10 und der hinteren Bremseinrichtung 11 können als hydraulische Bremse, als elektrohydraulische Bremse oder als elektromotorische Bremse ausgebildet sein, wobei sich der Bremsentyp von vorderer Bremseinrichtung 10 und hinterer Bremseinrichtung 11 ggf. unterscheiden kann. Die Bremseinrichtungen 10 und 11 werden über Stellsignale eines Regel- bzw. Steuergerätes 12 eingestellt, bei dem es sich ggf. um ein ESP-Steuergerät handelt. Über interne Datenleitungen, die vorzugsweise als CAN-Bus ausgeführt sind, ist das Regel- bzw. Steuergerät 12 mit dem Airbag-Steuergerät 14 verbunden, außerdem mit einer Sensorik 13, die Sensorsignale an das Regel- bzw. Steuergerät 12 übermittelt. Bei der Sensorik 13 handelt es sich um eine Zustandssensorik, mit der Fahrzeugzustandsgrößen der Längs- und/oder Querdynamik ermittelt werden können, beispielsweise die Fahrzeuglängsgeschwindigkeit, die Längsbeschleunigung, die Querbeschleunigung, die Gierrate oder Radschlüpfe. Alternativ oder zusätzlich umfasst die Sensorik 13 eine Umfeldsensorik, mit der das Umfeld des Kraftfahrzeugs 1 erfasst werden kann, beispielsweise der Abstand und die Relativgeschwindigkeit zu einem vorausfahrenden Fahrzeug. Die Umfeldsensorik umfasst beispielsweise radargestützte Sensoren, Lidarsensoren, optische Sensoren oder Ultraschallsensoren.

Gegebenenfalls sind im Fahrzeug über den Lenkrad-Airbag 3 hinausgehend weitere Airbags angeordnet, welche ebenfalls über das Airbag-Steuergerät 14 ausgelöst werden.

Im Falle einer Kollision des Kraftfahrzeugs 1 mit einem anderen Fahrzeug oder mit einem sonstigen Gegenstand wird über die Bremseinrichtungen des Fahrzeugs automatisch bzw. selbsttätig Bremskraft aufgebaut, um die Schwere der Unfallfolgen zu vermindern. Der selbsttätige Bremskraftaufbau erfolgt grundsätzlich unabhängig von einer Betätigung des Bremspedals durch den Fahrer, allerdings hat der Fahrer in bestimmten Situationen die Möglichkeit, durch eigene Reaktionen den selbsttätigen Bremskraftaufbau zu unterbinden bzw. abzubrechen. Der selbsttätige Aufbau der Bremskraft führt auch ohne Bremsreaktion des Fahrers zu einem selbsttätigen Abbremsen des Fahrzeuges, wodurch zusätzliche Sicherheit gewonnen wird. In Abhängigkeit von der aktuellen Unfallsituation können verschiedene Bremsstrategien realisiert werden, insbesondere im Hinblick auf einen verzögerten Aufbau selbsttätiger Bremskraft (Totzeit), im Hinblick auf den Gradienten des Bremskraftaufbaus sowie das zu erreichende Maximalniveau der Bremskraft.

Auch im Falle einer Betätigung des Bremspedals durch den Fahrer kann selbsttätig zusätzliche Bremskraft aufgebaut werden, insbesondere in der Situation, dass die vom Fahrer erzeugte Bremskraft geringer ist als der aktuellen Situation angemessen. Reicht dagegen die vom Fahrer generierte Bremskraft aus, so wird keine zusätzliche Bremskraft aufgebaut.

Damit der Fahrer zumindest in bestimmten Unfallsituationen die Hoheit über das Fahrzeug behält, ist vorgesehen, dass der Fahrer den selbsttätigen Bremskraftaufbau überstimmen kann, so dass der selbsttätige Bremskraftaufbau abgebrochen bzw. unterbunden wird. Dies wird gemäß der Erfindung in Unfallsituationen mit einer verhältnismäßig leichten Kollision durchgeführt. Als Maßstab für die Unfallschwere wird beispielsweise die Information herangezogen, ob die Fußpedale im Kraftfahrzeug, insbesondere das Bremspedal, das Beschleunigungspedal und ggf. das Kupplungspedal aus der regulären, in den Fußraum einragenden Betriebsposition durch aktive oder passive Sicherheitsmaßnahmen im Fahrzeug in eine aus dem Fußraum zumindest teilweise herausgezogene Außerbetriebsposition verstellt worden sind. Dieses Verstellen der Pedalerie wird vorzugsweise nur bei verhältnismäßig schweren Kollisionen durchgeführt, wohingegen bei leichteren Kollisionen die Pedalerie in der regulären Betriebsposition im Fußraum verbleiben kann.

Von der Verstellung der Fußpedale hängt es ab, ob der selbsttätige Bremskraftaufbau durch eine Reaktion des Fahrers abgebrochen bzw. unterbunden werden kann oder nicht. Bei lediglich leichteren Kollisionen, die beispielsweise über die Sensorik des Fahrzeuges festgestellt werden können, die jedoch für eine Verstellung der Fußpedale nicht ausreichen, kann der Fahrer den selbsttätigen Bremskraftaufbau durch eine Reaktion überstimmen und damit abbrechen bzw. unterbinden, beispielsweise durch eine eigene, kräftige Betätigung des Bremspedals. Bei schwereren Kollisionen jedoch, bei denen auch die Fußpedale aus dem Fußraum ausgezogen werden, ist dagegen ein Abbruch des selbsttätigen Bremskraftaufbaus durch eine Reaktion des Fahrers nicht möglich. In diesem Fall überwiegt das Risiko, dass eine entsprechende Fahrerreaktion auf einer Panikreaktion basiert, den Vorteil einer eigenständigen Bestimmung des Fahrzeugverhaltens durch den Fahrer. Durch den selbsttätigen Bremskraftaufbau wird vielmehr zusätzliche Fahrzeugsicherheit durch das Abbremsen des Fahrzeugs erreicht, auch wenn der Fahrer Panikreaktionen zeigt.

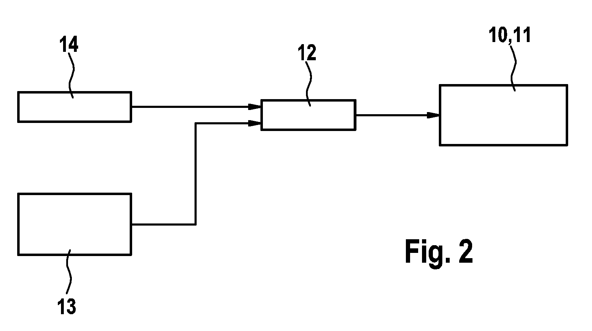

Wie in Fig. 2 dargestellt, kommunizieren das Airbag-Steuergerät 14 sowie die Sensorik 13 mit dem Regel- bzw. Steuergerät 12, das Stellsignale zur Einstellung der Bremseinrichtungen 10 und 11 generiert. Hierdurch wird der selbsttätige Bremskraftaufbau auf der Grundlage der als Eingangssignale dienenden Informationen vom Airbagsteuergerät 14 und der Sensorik 13 ermöglicht. Zugleich ist in den Fällen leichterer Kollisionen ein Abbruch des selbsttätigen Bremskraftaufbaus möglich, da über die Sensorik 13 die entsprechenden Fahrerreaktionen übermittelt werden können, mit denen der selbsttätige Bremskraftaufbau überstimmt werden kann. Die Sensorik 13 kann zu diesem Zweck auch Sensoren umfassen, die die aktuelle Position der Fußpedale oder des Lenkrades erfassen.

## Patentansprüche

1. Verfahren zur Einstellung eines Bremssystems eines Fahrzeugs, bei dem im Falle einer Kollision selbsttätig Bremskraft aufgebaut wird, **dadurch gekennzeichnet, dass** bei einer Kollision mindestens ein vom Fahrer zu betätigendes Fußpedal aus der regulären, in den Fußraum einragenden Betriebsposition in eine aus dem Fußraum zumindest teilweise entfernte Außerbetriebsposition verstellt wird, wobei die Bremskraft bei der Verstellung der Fußpedalposition aufgebaut bzw. aufrecht erhalten wird, wobei bei der Verstellung des mindestens einen Fußpedals in die Außerbetriebsposition die selbsttätige Bremskrafterzeugung unabhängig von Reaktionen des Fahrers beibehalten wird.

2. Verfahren nach Anspruch 1, **dadurch gekennzeichnet, dass** die Feststellung, ob eine Kollision vorliegt, an die Auslösung eines Airbags (3) im Fahrzeug (1) gekoppelt ist.

3. Verfahren nach Anspruch 1 oder 2, **dadurch gekennzeichnet, dass** die Feststellung, ob eine Kollision vorliegt, aus Sensorsignalen getroffen wird, mit denen eine längs- oder querdynamische Zustandsgröße gemessen wird.

4. Verfahren nach einem der Ansprüche 1 bis 3, **dadurch gekennzeichnet, dass** bei leichteren Kollisionen das mindestens eine Fußpedal in seiner Betriebsposition verbleibt und zugleich selbsttätig Bremskraft aufgebaut wird.

5. Verfahren nach Anspruch 4, **dadurch gekennzeichnet, dass** die selbsttätig aufgebaute Bremskraft durch eine Reaktion des Fahrers außer Kraft gesetzt werden kann, beispielsweise durch Betätigen des Beschleunigungspedals.

6. Verfahren nach Anspruch 4 oder 5, **dadurch gekennzeichnet, dass** die Schwere der Kollision anhand der Auslösung eines Airbags (3) beurteilt wird.

7. Regel- bzw. Steuergerät zur Durchführung des Verfahrens nach einem der Ansprüche 1 bis 6.

8. Bremssystem mit einem Regel- bzw. Steuergerät nach Anspruch 7.

9. Bremssystem nach Anspruch 8, **dadurch gekennzeichnet, dass** der selbsttätige Aufbau von Bremskraft über Stellsignale eines ESP-Steuergeräts erfolgt.

10. Fahrzeug mit einem Bremssystem nach Anspruch 8 oder 9, **dadurch gekennzeichnet, dass** im Fahrzeug (1) Mittel zur selbsttätigen Verstellung mindestens eines Fußpedals zwischen einer in den Fußraum einragenden Betriebsposition und einer aus dem Fußraum zumindest teilweise entfernten Außerbetriebsposition im Falle einer Kollision des Fahrzeugs (1) vorgesehen sind.

## Claims

1. Method for adjusting a brake system of a vehicle, in which in the event of a collision braking force is automatically built up, **characterized in that** in the event of a collision at least one foot pedal which is to be actuated by the driver is adjusted from the usual operating position in which it projects into the footwell into an out-of-operation position in which it is at least partially removed from the footwell, wherein the braking force is built up or maintained during the adjustment of the foot pedal position, wherein during the adjustment of the at least one foot pedal into the out-of-operation position the automatic generation of the braking force is continued independently of the driver's reactions.

2. Method according to Claim 1, **characterized in that** the detection as to whether a collision has occurred is coupled to the triggering of an airbag (3) in the vehicle (1).

3. Method according to Claim 1 or 2, **characterized in that** the detection as to whether a collision has occurred is made on the basis of sensor signals with which a longitudinal dynamic or transverse dynamic state variable is measured.

4. Method according to one of Claims 1 to 3, **characterized in that** in the event of relatively minor collisions the at least one foot pedal remains in its operating position and at the same time braking force is built up automatically.

5. Method according to Claim 4, **characterized in that** the automatically built-up braking force can be deactivated by a reaction by the driver, for example by actuating the acceleration pedal.

6. Method according to Claim 4 or 5, **characterized in that** the severity of the collision is assessed on the basis of the triggering of an airbag (3).

7. Closed- or open-loop control device for carrying out the method according to one of Claims 1 to 6.

8. Brake system having a closed- or open-loop control device according to Claim 7.

9. Brake system according to Claim 8, **characterized in that** the automatic building up of braking force is carried out by means of actuation signals of an ESP control device.

10. Vehicle having a brake system according to Claim 8 or 9, **characterized in that** provided in the vehicle (1) are means for automatically adjusting at least one foot pedal between an operating position in which it projects into the footwell and an out-of-operation position in which it is at least partially removed from the footwell, in the event of a collision of the vehicle (1).

## Revendications

1. Procédé pour l'ajustement d'un système de freinage d'un véhicule, dans lequel, dans le cas d'une collision, une force de freinage est automatiquement développée, **caractérisé en ce que** dans le cas d'une collision, au moins une pédale devant être actionnée par le conducteur est déplacée depuis la position de fonctionnement normale entrant dans l'espace pour les pieds dans une position hors fonctionnement au moins partiellement éloignée de l'espace pour les pieds, la force de freinage, lors du déplacement de la position de la pédale, étant développée ou maintenue, la génération de la force de freinage automatique, lors du déplacement de l'au moins une pédale dans la position hors fonctionnement, étant maintenue indépendamment des réactions du conducteur.

2. Procédé selon la revendication 1, **caractérisé en ce que** la détermination de la présence ou non d'une collision est accouplée au déclenchement d'un airbag (3) dans le véhicule (1).

3. Procédé selon la revendication 1 ou 2, **caractérisé en ce que** la détermination de la présence ou non d'une collision est réalisée par des signaux de capteur avec lesquels une grandeur d'état dynamique longitudinale ou transversale est mesurée.

4. Procédé selon l'une quelconque des revendications 1 à 3, **caractérisé en ce que** dans le cas de plus légères collisions, l'au moins une pédale reste dans sa position de fonctionnement et en même temps la force de freinage est automatiquement développée.

5. Procédé selon la revendication 4, **caractérisé en ce que** la force de freinage développée automatiquement peut être mise hors d'action par une réaction du conducteur, par exemple par actionnement de la pédale d'accélérateur.

6. Procédé selon la revendication 4 ou 5, **caractérisé en ce que** la sévérité de la collision est évaluée à l'aide du déclenchement d'un airbag (3).

7. Appareil de régulation ou de commande pour mettre en oeuvre le procédé selon l'une quelconque des revendications 1 à 6.

8. Système de freinage comprenant un appareil de régulation ou de commande selon la revendication 7.

9. Système de freinage selon la revendication 8, **caractérisé en ce que** le développement automatique de la force de freinage s'effectue par le biais de signaux de commande d'un appareil de commande ESP.

10. Véhicule comprenant un système de freinage selon la revendication 8 ou 9, **caractérisé en ce que** des moyens pour le réglage automatique d'au moins une pédale entre une position de fonctionnement pénétrant dans l'espace pour les pieds et une position hors fonctionnement au moins partiellement éloignée de l'espace pour les pieds dans le cas d'une collision du véhicule (1) sont prévus dans le véhicule (1).
